(19)

Europäisches
Patentamt

European
Patent Office

Office européen
des brevets

(11) **EP 4 342 856 A1**

(12) **EUROPEAN PATENT APPLICATION**

(43) Date of publication:
**27.03.2024   Bulletin 2024/13**

(21) Application number: **22196888.6**

(22) Date of filing: **21.09.2022**

(51) International Patent Classification (IPC):
**C03B 5/027** *(2006.01)*      **C03B 5/167** *(2006.01)*
**C03B 5/42** *(2006.01)*        **C03C 3/091** *(2006.01)*

(52) Cooperative Patent Classification (CPC):
**C03B 5/027; C03B 5/167; C03B 5/42; C03C 3/091**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SCHOTT AG**
**55122 Mainz (DE)**

(72) Inventors:
• **Eichholz, Rainer Erwin**
  **60323 Frankfurt am Main (DE)**
• **Rasp, Josef**
  **95652 Waldsassen (DE)**
• **Strobel, Alexander Uwe**
  **95326 Kulmbach (DE)**

• **Axt, Werner**
  **55459 Grolsheim (DE)**
• **Sattler, Patrick**
  **55124 Mainz (DE)**
• **Wurm, Reinhard**
  **95692 Konnersreuth (DE)**
• **Doss, Roland**
  **95666 Mitterteich (DE)**
• **Schmidbauer, Wolfgang**
  **55126 Mainz (DE)**
• **Ohmstede, Volker**
  **55411 Bingen (DE)**
• **Hofmann, Kim Oliver**
  **55252 Mainz-Kastel (DE)**

(74) Representative: **Fuchs Patentanwälte
Partnerschaft mbB
Tower 185
Friedrich-Ebert-Anlage 35-37
60327 Frankfurt am Main (DE)**

(54) **METHOD AND APPARATUS FOR MAKING A GLASS PRODUCT AND CORRESPONDING
GLASS PRODUCT**

(57)    Disclosed are a method and apparatus for making a glass product and a corresponding glass product. The method comprises electric heating of the raw materials and/or the glass melt at current frequencies between 1 kHz and 5 kHz and is characterized by a low carbon footprint. The apparatus may comprise coaxial shielding means on the connectors between the electrodes and the frequency changer and/or the supporting structure of the melter may comprise non-ferromagnetic materials. Low corrosion of the electrodes and low amount of bubbles in the glass are achieved.

EP 4 342 856 A1

**Description**

The present invention relates to a method and apparatus for making a glass product and a corresponding glass product. The method comprises electric heating of the raw materials and/or the glass melt and is characterized by a low carbon footprint.

Background

The glassmaker has a number of options for heating a glass melt, e.g. gas burners, electric resistance heating, or inductive heating. As of today, gas is the predominant heat source used in glass melting.

The production of glass has a quite high carbon footprint due to the amount of energy required for the melting and fining processes. This is particularly the case for heating by gas burners which use natural gas. A reduction of the carbon footprint is possible if, instead, an electric resistance heating is used which is provided with power from renewable energy sources like wind power, water power, or solar panels. The same power sources may also be used to produce hydrogen by electrolysis which then can be used to feed the gas burners. While the latter requires less changes to an existing glass production facility with a gas burner heating, the intermediate step of electrolysis is of course associated with a considerable energy loss. Hence, a direct use of the electrical power is more desirable.

There are different kinds of glass compositions. Some glass compositions are relatively easy to manufacture in good quality, others require sophisticated equipment and/or extremely well balanced production processes. Generally, the glass compositions used to make drinking glasses and bottles, ordinary windowpanes and other construction glass products (e.g. glass wool used for insulation) are of the former type. One reason is that the glass used for these products has rather low melting temperatures and a steep viscosity-temperature curve; in addition, quality criteria of the manufactured products are not very stringent. For example, drinking glasses and construction glass products may contain an occasional bubble, and variations in shape and dimension are tolerable. These glass products may contain impurities to a certain extent without a problem because their use does not require defined light transmission properties, or stringent purity regulations.

The types of glass compositions used for many mass products, such as soda lime glass compositions, have low melting temperatures because of significant amounts of alkali metal oxides and alkaline earth metal oxides. The respective glass melting facilities achieve very high throughput, often more than 200 tons of glass per day, or even 400 tons per day. Of course, the amount of energy needed for making 200 tons of low melting glass is significantly lower than for a higher melting glass.

The quality required for a given product depends on its intended use. Some high-quality glasses are used to make products that do not entertain the occasional bubble and must meet stringent criteria in terms of shape, dimensional variations and purity (both chemical and optical). Many of these glasses are rather difficult to manufacture not only because of the stringent criteria but also because of high melting temperatures. High melting temperatures may be necessary to achieve melt viscosities sufficient for homogenization and removal of bubbles from the melt. Examples of high-quality glass products include pharmaceutical containers and glass tubes used for making such containers.

It is an object of this invention to provide glass products that meet high quality criteria.

While the use of an electric resistance heating for producing such high quality glass products would be favorable, it faces several difficulties which until the present day have impeded a more widespread application.

One of these difficulties is the corrosion of the electrodes. When operated at the standard line frequency of 50 Hz, a considerable amount of the metal of the electrodes dissolves into the glass melt and/or bubbles may form on the electrode surfaces. This problem is particularly pronounced with glass melts having a high electric conductivity because the high electric conductivity requires high current densities for generating enough heat within the glass melt to keep it in the liquid state. The high current density in turn increases the electro corrosion effect on the electrodes and the material loss. This material loss of the electrodes is critical particularly for two reasons.

The first reason is obviously the requirement to replace the electrodes at certain intervals. This not only increases the operation costs for the facility but also has an impact on the carbon footprint since for the production of the electrodes a considerable amount of energy is required. Depending on the type of metal used, very high temperatures for melting have to be achieved and the further shaping and handling steps again consume energy. Hence, a frequent exchange of the electrodes significantly increases the carbon footprint of the glass production method. In addition to this, the glass production process has to be stopped for maintenance because it is not possible to simply pull single electrodes out of the melting tank for replacement while the facility continues operation. Hence, when restarting the facility after a replacement of the electrodes, either the whole melting tank filled with the solidified glass melt will have to be heated by burners for re-melting in order to be able to lower the new electrodes into the melt or the glass melt will have to be completely drained from the melting tank before shutting down the process and the process will have to start from scratch by melting new raw materials - again with burners - to prepare a new melt. The amount of energy and the respective carbon footprint required for this shutdown and restarting procedure are even higher than for the production of the electrodes. Of course, the impact on the productivity of the facility is also quite tremendous since it takes days to weeks to reach stable production conditions again which are required for a constant quality glass product.

The second reason is the just mentioned glass quality. The dissolved metal of the electrodes may cause severe discolorations of the glass melt in different colors depending on the type of metal and glass composition used. While this may be tolerable to a certain extent for cheaper glass products which are dark colored anyway, it is already intolerable for cheaper glass products which are to be completely colorless or to have a certain defined color. For high-quality expensive glass products, this discoloration is an absolute show-stopper which has to be avoided by all means.

Hence, it is another object of the present invention to provide a production method for high quality glass products which has a low carbon footprint over the entire process. Further, this process should in particular work for glass types having a good electric conductivity.

Summary of invention

**Definitions**

A "glass melt" is a volume of a batch of glass raw materials that has a viscosity of less than $10^{7.6}$ dPas.

Such a viscosity can be measured using the fiber elongation method, e.g. as described in DIN ISO 7884-6:1998-02, where the elongation speed of a fiber with a defined diameter is determined with different weights at different temperatures.

The temperature at which the glass melt has a viscosity of $10^2$ dPas is herein called "temperature T2". Similarly, the temperature at which the glass melt has a viscosity of $10^4$ dPas is herein called "temperature T4". Temperature T2 is less than 1,500 °C for glass compositions with high contents of alkali metal oxides or alkaline earth metal oxides, such as soda lime glass and other glass compositions.

These viscosities can be measured using a rotational viscosimeter, e.g. as described in DIN ISO 7884-2:1998-2. The dependence of viscosity on temperature is determined according to the VFT equation (Vogel-Fulcher-Tammann). The VFT equation is shown below.

$$\lg(\eta/dPas) = A + \frac{B}{(t-t_0)}$$

In the VFT equation, t is the temperature under consideration. A, B and $t_0$ are the so-called VFT constants that are specific for each glass composition.

A "melting tank" is a vessel used for melting glass. The vessel defines a volume that can contain a glass melt. The melting tank may have a substantially rectangular base, or bottom plate. It may have walls to keep the melt within the tank. Typically, a melting tank will not be filled to the rim. A melting tank may have a cover above the glass melt surface ("covered melting tank"). The cover may be vaulted. The "melting tank" may be a part of a larger melting facility, which may comprise further parts such as a refining tank or refining area. Some melting facilities have a combined tank with different sections, one section for melting and one for refining, in which case the "melting tank" according to this disclosure relates to the whole combined tank including the refining section.

The "bottom plate" is a part of the melting tank that forms the bottom of the tank. The bottom plate may be a single piece of material. Alternatively, the bottom plate may be composed of a plurality of parts or sections. The bottom plate may be closed, i.e. essentially impermeable to the glass melt. Alternatively, the bottom plate may have a closable opening so that glass melt may be withdrawn from the melting tank through the bottom opening.

A "bubble" is a gaseous inclusion within the glass or the glass melt, optionally having a diameter of at least 10 $\mu$m. The "diameter" means the largest diameter of the gaseous inclusion.

"Dwelling time" is the time that a given portion of the glass melt spends in the melting tank before being withdrawn from the melting tank. Dwelling time can be measured using so-called tracers, i.e. components that are added to the glass melt so that they can be detected in the product, allowing conclusions as to the time spent in the melting tank. Examples of tracer compounds are Ca, Sr and Y. The "average dwelling time" is defined as:

$$\frac{melting\ tank\ volume\ [m^3]}{melting\ tank\ throughput\ [\frac{m^3}{h}]}$$

The "relative permeability $\mu_T$" is defined as the ratio of the permeability $\mu$ of a specific medium to the permeability $\mu_0$ of free space, wherein $\mu_0$ of vacuum, also called the magnetic constant, is defined as $1.25663706212 \cdot 10^{-6}$ H/m:

$$\mu_T = \frac{\mu\ \left[\frac{H}{m}\right]}{\mu_0\ \left[\frac{H}{m}\right]}$$

The "total power dissipation", as referred to within this application, is defined as the sum of the power dissipation of the electric melting process, which may be determined between the frequency converter and the glass melt, and the amount of energy spent for the production of new electrodes and re-heating the melting tank to operation temperature after a shutdown for exchanging the spent electrodes. The term is intended to express the amount of energy spent during the overall process including its auxiliary processes which does not result in heating the melt. The production of new electrodes is very energy consuming. The number of electrodes used for a considered melting tank is of course relevant for the required energy to be spent for the production of the electrodes. Further, the exact amount of energy required differs with the chosen electrode material and size. The same applies for the energy required for re-heating the melting tank. It depends on the type of glass and its respective melt temperature and the size of the melting tank.

The invention

This disclosure relates to glass making processes that are as energy efficient as possible, even though the molten glass compositions melt at very high temperatures. They are characterized by a comparatively low carbon footprint. The processes do not sacrifice glass product quality for energy efficiency.

In a first aspect, this disclosure relates to a method of making a glass product, comprising the steps

- melting a batch of raw materials to form a glass melt in a melting tank,

- heating the batch and/or the glass melt using two or more electrodes, the electrodes comprising an electrode material,

- withdrawing the glass melt from the melting tank,

- forming the glass melt into a glass product,

wherein the electrode is operated at a current frequency of at least 1,000 Hz and at most 5,000 Hz.

The glass product can be a sheet, wafer, plate, tube, rod, ingot or block.

The inventors found that a particularly low corrosion rate of electrodes is achieved, if the operation frequency of the electrodes is optimized. Prior art processes typically employ frequencies of 50 Hz (line frequency) or slightly above. The inventors analyzed electrode corrosion behavior at these frequencies and other electrode operation frequencies. They found that electrode corrosion can be reduced at operation frequencies significantly higher than 50 Hz and lower than 10 kHz.

However, it was also found that while increasing the frequencies up to 10 kHz has reduced the corrosion of the electrodes, the increasing reduction in corrosion is linked with an increasing loss of power which can effectively be used for heating because of electric and magnetic stray fields. At the currents required for melting glass types having good electric conductivity, the losses by emission and coupling into surrounding equipment parts are such high that the process is not feasible anymore. The coupling into equipment parts even leads to structural damage of the facility because the amount of heat generated by this induction process in the parts is large enough to let them melt or at least deform.

The inventors have discovered that the claimed current frequency range will achieve both objects of a good glass quality as well as a low carbon footprint. Particularly when reducing the number of electrodes in a melting tank or producing glass melts having a high electric conductivity, these objects are difficult to achieve. However, a reduction of the number of the electrodes is very desirable because every electrode holder is provided with a water cooling in order to prevent the electrodes from melting which causes a considerable energy loss. The reduced number of electrodes results in a higher current density since the same or even a higher current has to flow through the reduced total surface of the electrodes in order to sufficiently heat the glass melt. Similarly, the current density has to be higher for glass melts having a high electric conductivity in order to generate enough heat. The application of higher current frequencies up to 10 kHz will allow for a higher current density while keeping the corrosion of the electrode at low levels.

However, at high frequencies there is more loss of power in the cables, the frequency changer, and at the electrodes. The efficiency of frequency changers is decreasing with increasing frequency. So, there will already be a considerable loss of power at the supply of the electrodes. Moreover, the high frequency current creates magnetic alternating fields which will induce eddy currents in the surrounding facility parts which are made of electrically conductive materials.

The supporting structures, like beams and traverses, as well as the bracings or guy-wires stabilizing the refractory material of the melting tank walls are usually made of steel. All of them cause a power dissipation by inductive coupling and generation of heat. At 10 kHz, already about a third of the mains power is lost for heating the melt. While the losses would be smaller at lower currents, these would then be insufficient for adequately heating the melt.

Another aspect of a reduced number of electrodes is the larger distance between them. In a typical production sized glass melting tank, they may then easily be several meters apart from each other. This increased distance between the electrodes leads to an increase in the loss of power due to radio frequency emission. At higher current frequencies, the spaced apart electrodes act like an antenna.

The electrode may be operated at a current frequency of less than 5,000 Hz, less than 4,500 Hz, less than 4,000 Hz, less than 3,500 Hz, or less than 3,000 Hz. In particular, the electrode may be operated at a current frequency of less than 3,000 Hz. The electrode may be operated at a current frequency of at least 1,000 Hz, at least 1,500 Hz, at least 2,000 Hz, or at least 2,500 Hz. A lower limit of 1,000 Hz ascertains that the electrode corrosion is sufficiently low at the required current density and the formation of bubbles is adequately suppressed.

An upper limit of 5,000 Hz ascertains that the power loss due to emission and induction remains at an acceptable level.

In a second aspect, this disclosure relates to a method of making a glass product, comprising the steps

- melting a batch of raw materials to form a glass melt,

- heating the batch and/or the glass melt using two or more electrodes, the electrodes comprising an electrode material,

- withdrawing the glass melt from the melting tank,

- forming the glass melt into a glass product,

wherein a temperature of the melt, a withdrawal rate of glass melt from the melting tank, and an operation frequency of the electrodes is such that the corrosion rate of the electrodes is less than 2.5 mm/a with a current density of 0.5 A/cm$^2$ and a glass melt temperature of 1,600 °C.

It has been found by the inventors to be advantageous to select the listed parameters in combination such that the corrosion rate of the electrodes is less than 2.5 mm/a for optimal results. The corrosion rate may be less than 2.5 mm/a, less than 2.25 mm/a, less than 2.0 mm/a, less than 1.75 mm/a, or less than 1.5 mm/a. The corrosion rate may be at least 0.05 mm/a, at least 0.1 mm/a, at least 0.15 mm/a, at least 0.2 mm/a, at least 0.25 mm/a, or at least 0.3 mm/a.

In a third aspect, this disclosure relates to a method of making a glass product, comprising the steps

- melting a batch of raw materials to form a glass melt,

- heating the batch and/or the glass melt using one or more electrodes, the electrodes comprising an electrode material,

- withdrawing the glass melt from the melting tank,

- forming the glass melt into a glass product having a glass composition,

wherein the fining agent is present in an amount of at least 300 ppm, the electrode material is present as an oxide in an amount of less than 5 ppm, the glass product comprising less than 2 bubbles per 10 g of glass, and wherein the fining agent has an alloy forming property towards the electrode material characterized by the formation of a substitutional alloy at temperature T2.5 of the product's glass composition, wherein optionally the glass composition has a total carbon content of less than 310 ppm, based on the weight of the carbon atoms with respect to the weight of the glass product.

The fining agent may be present in an amount of at least 300 ppm or at least 400 ppm or at least 500 ppm or at least 600 ppm or at least 700 ppm or at least 800 ppm or at least 900 ppm or at least 1000 ppm. The fining agent may be present in an amount of at most 1000 ppm or at most 900 ppm or at most 800 ppm or at most 700 ppm or at most 600 ppm or at most 500 ppm or at most 400 ppm or at most 300 ppm. The fining agent may be present in an amount of 300 ppm to 1000 ppm or 400 ppm to 1000 ppm or 500 ppm to 1000 ppm or 600 ppm to 1000 ppm or 700 ppm to 1000 ppm.

The electrode material may be present as an oxide in an amount of less than 5 ppm or less than 4.5 ppm or less than 4 ppm or less than 3.5 ppm or less than 3 ppm or less than 2.5 ppm or less than 2 ppm. The electrode material may be present as an oxide in an amount of more than 0.1 ppm or more than 0.2 ppm or more than 0.3 ppm or more than 0.4 ppm or more than 0.5 ppm or more than 0.75 ppm or more than 1 ppm.

The total carbon content may be of less than 310 ppm or of less than 300 ppm or of less than 290 ppm or of less than 280 ppm or of less than 270 ppm or of less than 260 ppm or of less than 250 ppm.

The method according to the invention may be a continuous process or a batch process. It is equally suitable for both operation modes and reduces the carbon footprint in both of them. However, since for a batch process a new initial heating step is required for each new batch, the advantage of reduction of the carbon footprint is greater in a continuous process.

The method may be a continuous process having a throughput of at least 1 t/d·m$^2$ of melting tank cross-section. The throughput may be at least 1 t/d·m$^2$ or at least 2 t/d·m$^2$ or at least 3 t/d·m$^2$ or at least 4 t/d·m$^2$. The throughput may be at most 10 t/d·m$^2$ or at most 9 t/d·m$^2$ or at most 8 t/d·m$^2$. The throughput may be 1 t/d·m$^2$ to 10 t/d·m$^2$ or 2 t/d·m$^2$ to 9 t/d·m$^2$ or 3 t/d·m$^2$ to 8 t/d·m$^2$ or 4 t/d·m$^2$ to 8 t/d·m$^2$. Such a throughput may aid in reducing the content of the electrode material in the resulting glass product. The increased flow of the glass melt shortens the dwelling time of the melt in the melting tank and consequently the time during which the melt may be contaminated with the dissolved electrode material. Meanwhile, the corrosion rate of the electrodes remains essentially constant since the main factors of influence are the composition of the glass melt, the electrode material, and the current density.

In embodiments, additional heating can be provided by a fuel burner, or no fuel burner is used for additional heating. Preferably, no fuel burner is used for additional heating. If the amount of heat required by the glass melt is very high, it may be more favorable in view of the carbon footprint not to increase the current density, as it causes more corrosion and power loss, but to provide additional heat by a burner. This burner will then preferably be fueled by a "green gas", i.e. hydrogen produced from renewable energies. However, in general no fuel burner should be used. As an alternative to a fuel burner, also an electrical additional heating means can be used.

A preferred current density used at the electrodes is 0.2 A/cm$^2$ - 2.0 A/cm$^2$. This range provides the best balance between power input into the melt and corrosion as well as reduction of the number of electrodes. The current density may be 0.2 A/cm$^2$ - 2.0 A/cm$^2$ or 0.3 A/cm$^2$ - 1.8 A/cm$^2$ or 0.4 A/cm$^2$ - 1.65 A/cm$^2$ or 0.5 A/cm$^2$ - 1.5 A/cm$^2$. The current density may be at least 0.2 A/cm$^2$ or at least 0.3 A/cm$^2$ or at least 0.4 A/cm$^2$ or at least 0.5 A/cm$^2$. The current density may be at most 2.0 A/cm$^2$ or at most 1.8 A/cm$^2$ or at most 1.65 A/cm$^2$ or at most 1.5 A/cm$^2$.

In some embodiments, a ratio of the current frequency to the electric conductivity of the melt at temperature T2 is 3 kHz·Ω·m to 140 kHz·Ω·m. It has been found by the inventors that by means of this ratio range, the current frequency may be set to provide a low carbon footprint for a given glass composition to be melted having a certain electric conductivity. The ratio may be at least 3 kHz·Ω·m, at least 5 kHz·Ω·m, at least 7 kHz·Ω·m, at least 10 kHz·Ω·m, at least 15 kHz·Ω·m, at least 20 kHz·Ω·m, or at least 25 kHz·Ω·m. The ratio may be at most 140 kHz·Ω·m, at most 130 kHz·Ω·m, at most 120 kHz·Ω·m, at most 110 kHz·Ω·m, at most 100 kHz·Ω·m, at most 75 kHz·Ω·m, at most 50 kHz·Ω·m. The ratio may be 3 kHz·Ω·m - 140 kHz·Ω·m, 5 kHz·Ω·m - 130 kHz·Ω·m, 7 kHz·Ω·m - 120 kHz·Ω·m, 10 kHz·Ω·m - 110 kHz·Ω·m, 15 kHz·Ω·m - 100 kHz·Ω·m, 20 kHz·Ω·m - 75 kHz·Ω·m, or 25 kHz·Ω·m - 50 kHz·Ω·m.

In some embodiments, the electric conductivity of the melt at temperature T2 is at least 3 S/m. The current method is particularly useful for glass compositions which form a melt having a high electric conductivity because the problem of an increased carbon footprint is very pronounced in these types of glass and not yet satisfactorily solved in the state of the art. The electric conductivity may be at least 3 S/m, at least 4 S/m, at least 5 S/m, at least 10 S/m, at least 15 S/m, at least 20 S/m, at least 25 S/m, or at least 30 S/m. The electric conductivity may be at most 45 S/m, at most 44 S/m, at most 43 S/m, at most 42 S/m, at most 41 S/m, at most 40 S/m, at most 38 S/m, or at most 36 S/m. The electric conductivity may be 3 S/m - 45 S/m, 4 S/m - 44 S/m, 5 S/m - 43 S/m, 10 S/m - 42 S/m, 15 S/m - 41 S/m, 20 S/m - 40 S/m, 25 S/m - 38 S/m, or 30 S/m - 36 S/m.

In a fourth aspect, this disclosure relates to an apparatus for glass melting comprising

- a melting tank having walls and a bottom, and optionally a cover, for holding a glass melt,

- a supporting structure for the walls and/or the bottom and/or the cover of the melting tank,

- two or more electrodes immersible into the glass melt,

- a transformer and a frequency changer,

- conductors connecting the transformer, frequency changer and electrodes, and

- optionally an outlet for the glass melt,

wherein

- the conductors connecting the electrodes with the frequency changer comprise coaxial shielding means, and/or

- the supporting structure comprises, preferably consists of, non-ferromagnetic materials, preferably a material having a relative permeability $\mu_T$ of 1.0 to 80, in particular stainless steel.

The power dissipation and, hence, the carbon footprint of the method may further be reduced by providing the conductors with a shielding and/or using non-ferromagnetic materials for the supporting structure. Both features avoid or at least reduce the electromagnetic coupling of the high frequency current into the surrounding parts of the apparatus.

Preferably, the frequency changer is set to provide a current frequency of at least 1,000 Hz and at most 5,000 Hz.

Preferably, the supporting structure comprises bracings and/or guy-wires being arranged and/or constructed in a manner interrupting inductive loops. This means that those parts of the apparatus are designed and/or attached such that they avoid the induction of eddy currents resulting in a heating of them. This additional measure may further reduce the power dissipation or *vice versa* allow for higher currents.

The electrode material may be selected from Pt, Rh, Ir, Pd, alloys of these noble metals, Ta, Mo, MoSi$_2$, MoZrO$_2$, W, SnO$_2$, and combinations thereof. By using one of these materials, the overall carbon footprint can be optimized. Those electrodes provide an optimal combination of low corrosion, comparatively low carbon footprint during manufacture, and suitability for the operation at the claimed current frequencies.

Some fining agents have a tendency to form alloys with electrode material. These combinations of fining agent and electrode material require most attention by the glassmaker because the fining agent may accelerate dissolution of electrode material into the glass melt. Resulting glass products may be unusable for the intended purpose.

In embodiments, one or more electrodes are located partially or completely in or on a wall of the melting tank and/or in or on the bottom of the melting tank and/or constitute a wall section and/or a bottom section of the melting tank. One or more electrodes may be located partially or completely in or on a wall of the melting tank. One or more electrodes may be located partially or completely in or on a bottom plate of the melting tank. In an embodiment, one or more electrodes constitute a wall section and/or a bottom plate section of the melting tank. In an embodiment, one or more of the electrodes may be extending upwardly from the bottom of the melting tank up to at least 50 % glass melt depth, preferably at least 60 %, at least 70 % or at least 80 % of the glass melt depth. Optionally, the one or more electrodes may extend up to 100 %, up to 95 % or up to 90 % of the glass melt depth from the bottom of the melting tank. Optionally, the one or more electrodes may extend from 50 % to 100 %, from 60 % to 95 %, or from 70 % to 90 % of the glass melt depth from the bottom of the melting tank.

In preferred embodiments, the total power dissipation is less than 0.5 kWh/kg glass. The power dissipation of the melting process may be determined between the frequency converter and the glass melt. The total power dissipation is the sum of this power dissipation and the amount of energy spent for the production of new electrodes and re-heating the melting tank to operation temperature after a shutdown for exchanging the spent electrodes. Optionally, the power dissipation may be less than 0.5 kWh/kg glass, less than 0.4 kWh/kg glass, less than 0.3 kWh/kg glass, less than 0.2 kWh/kg glass or less than 0.1 kWh/kg glass. Optionally, the power dissipation may be more than 0.01 kWh/kg glass, more than 0.02 kWh/kg glass, more than 0.03 kWh/kg glass, more than 0.04 kWh/kg glass or more than 0.05 kWh/kg glass.

In preferred embodiments, the power dissipation is less than 35 %. The power dissipation of the melting process may be determined between the frequency converter and the glass melt. The total power dissipation is the sum of this power dissipation and the amount of energy spent for the production of new electrodes and re-heating the melting tank to operation temperature after a shutdown for exchanging the spent electrodes. Optionally, the power dissipation may be less than 35 %, less than 30 %, less than 25 %, less than 20 % or less than 10 %. Optionally, the power dissipation may be more than 1 %, more than 2 %, more than 4 %, more than 6 % or more than 8 %.

In a fifth aspect, this disclosure relates to a glass product, optionally obtainable according to the method disclosed herein, comprising a glass composition having a fining agent and electrode material, wherein the fining agent is present in an amount of at least 300 ppm and the electrode material is present as an oxide in an amount of less than 5 ppm, the glass product comprising less than 2 bubbles per 10 g of glass, wherein optionally the glass composition has a total carbon content of less than 310 ppm, based on the weight of the carbon atoms with respect to the weight of the glass product.

The fining agent may be present in an amount of at least 300 ppm or at least 400 ppm or at least 500 ppm or at least 600 ppm or at least 700 ppm or at least 800 ppm or at least 900 ppm or at least 1000 ppm. The fining agent may be present in an amount of at most 1000 ppm or at most 900 ppm or at most 800 ppm or at most 700 ppm or at most 600 ppm or at most 500 ppm or at most 400 ppm or at most 300 ppm. The fining agent may be present in an amount of 300 ppm to 1000 ppm or 400 ppm to 1000 ppm or 500 ppm to 1000 ppm or 600 ppm to 1000 ppm or 700 ppm to 1000 ppm.

The electrode material may be present as an oxide in an amount of less than 5 ppm or less than 4.5 ppm or less than 4 ppm or less than 3.5 ppm or less than 3 ppm or less than 2.5 ppm or less than 2 ppm. The electrode material may be present as an oxide in an amount of more than 0.1 ppm or more than 0.2 ppm or more than 0.3 ppm or more than 0.4 ppm or more than 0.5 ppm or more than 0.75 ppm or more than 1 ppm.

The total carbon content may be of less than 310 ppm or of less than 300 ppm or of less than 290 ppm or of less than 280 ppm or of less than 270 ppm or of less than 260 ppm or of less than 250 ppm.

In a further aspect, this disclosure relates to a glass product comprising a fining agent and electrode material, wherein the fining agent is present in an amount of at least 300 ppm, the electrode material is present as an oxide in an amount of less than 5 ppm, the glass product comprising less than 2 bubbles per 10 g of glass, and wherein fining agent has an alloy forming property towards the electrode material characterized by the formation of a substitutional alloy at temperature $T_{2.5}$ of the product's glass composition, wherein optionally the glass composition has a total carbon content of less than 310 ppm, based on the weight of the carbon atoms with respect to the weight of the glass product.

The fining agent may be present in an amount of at least 300 ppm or at least 400 ppm or at least 500 ppm or at least 600 ppm or at least 700 ppm or at least 800 ppm or at least 900 ppm or at least 1000 ppm. The fining agent may be present in an amount of at most 1000 ppm or at most 900 ppm or at most 800 ppm or at most 700 ppm or at most 600 ppm or at most 500 ppm or at most 400 ppm or at most 300 ppm. The fining agent may be present in an amount of 300 ppm to 1000 ppm or 400 ppm to 1000 ppm or 500 ppm to 1000 ppm or 600 ppm to 1000 ppm or 700 ppm to 1000 ppm.

The electrode material may be present as an oxide in an amount of less than 5 ppm or less than 4.5 ppm or less than 4 ppm or less than 3.5 ppm or less than 3 ppm or less than 2.5 ppm or less than 2 ppm. The electrode material may be present as an oxide in an amount of more than 0.1 ppm or more than 0.2 ppm or more than 0.3 ppm or more than 0.4 ppm or more than 0.5 ppm or more than 0.75 ppm or more than 1 ppm.

The total carbon content may be of less than 310 ppm or of less than 300 ppm or of less than 290 ppm or of less than 280 ppm or of less than 270 ppm or of less than 260 ppm or of less than 250 ppm.

Using the method disclosed herein, glass products are available that contain less electrode material, despite being fined with alloy-forming fining agents. This allows for efficient bubble removal even in these sensitive glass melts. Moreover, the glass product may have a low total carbon content because the improved heating technology presented herein does not introduce carbon dioxide into the melt.

In a further aspect, the glass product may comprise a glass composition having an amount of an electrode material in the form of an oxide of from 0.1 ppm to 5 ppm, wherein optionally the electrode material is selected from Pt, Rh, Ir, Pd, alloys of these noble metals, Ta, Mo, $MoSi_2$, $MoZrO_2$, W, $SnO_2$ and combinations thereof.

The electrode material may be present as an oxide in an amount of from 0.1 ppm to 5 ppm, from 0.2 ppm to 4.5 ppm, from 0.3 ppm to 4 ppm, from 0.4 ppm to 3.5 ppm, from 0.5 ppm to 3 ppm, from 0.75 ppm to 2.5 ppm, or from 1 ppm to 2.5 ppm, The electrode material may be present as an oxide in an amount of less than 5 ppm or less than 4.5 ppm or less than 4 ppm or less than 3.5 ppm or less than 3 ppm or less than 2.5 ppm or less than 2 ppm. The electrode material may be present as an oxide in an amount of more than 0.1 ppm or more than 0.2 ppm or more than 0.3 ppm or more than 0.4 ppm or more than 0.5 ppm or more than 0.75 ppm or more than 1 ppm.

In a further aspect, the glass product may comprise a glass composition having a conductivity for thermal radiation at 1,580 °C of at least 300 W/m·K. The conductivity for thermal radiation may be at least 300 W/m·K, at least 310 W/m·K, at least 320 W/m·K, or at least 330 W/m·K. The conductivity for thermal radiation may be at most 800 W/m·K, at most 700 W/m·K, at most 600 W/m·K, or at most 500 W/m·K.

In a further aspect, the glass product may comprise a fining agent, which is selected from the group consisting of $As_2O_3$, $Sb_2O_3$, $CeO_2$, $SnO_2$, $Fe_2O_3$, chloride, fluoride, sulfate, and combinations thereof.

In a further aspect, the glass product may comprise a glass composition having a T2 at 1,580 °C or higher, and/or a temperature T4 at 1,000 °C or higher.

The method of this invention is particularly useful for glass compositions with very high melting temperatures, such as glass compositions comprising only limited amounts of alkali and alkaline earth metal oxides. The composition of the glass may, for example, be such that the melt has a viscosity of 100 dPas at temperatures above 1,580 °C. When heating the melt to a temperature sufficiently high that the viscosity is $10^{2.5}$ dPas or less, a lot of energy is required. However, low viscosities and the corresponding high temperatures are desirable for bubbles to leave the melt.

Preferably, the glass compositions used in this invention have T2 temperatures much higher than 1,500 °C. The T2 temperature for the glass melt in the melting tank during the method of this disclosure may be above 1,580 °C and preferably even above 1,600 °C or above 1,620 °C. In embodiments, T2 temperature of the glass compositions may be less than 1,800 °C, less than 1,750 °C or less than 1,700 °C. Glass compositions with very high T2 temperatures are very difficult to process and require a lot of energy for melting.

The T4 temperature of the glass composition in the melting tank during the method of this disclosure may be above 1,000 °C and preferably even above 1,050 °C or above 1,120 °C. In embodiments, T4 temperature of the glass compositions may be less than 1,400 °C, less than 1,350 °C or less than 1,300 °C. Glass compositions with very high T4 temperatures are very difficult to process and require a lot of energy for melting.

In a further aspect, the glass product may comprise a glass composition having an electric conductivity of at least 3 S/m in the molten state at temperature T2. The electric conductivity may be at least 3 S/m, at least 4 S/m, at least 5 S/m, at least 10 S/m, at least 15 S/m, at least 20 S/m, at least 25 S/m, or at least 30 S/m. The electric conductivity may be at most 45 S/m, at most 44 S/m, at most 43 S/m, at most 42 S/m, at most 41 S/m, at most 40 S/m, at most 38 S/m, or at most 36 S/m. The electric conductivity may be 3 S/m - 45 S/m, 4 S/m - 44 S/m, 5 S/m - 43 S/m, 10 S/m - 42 S/m, 15 S/m - 41 S/m, 20 S/m - 40 S/m, 25 S/m - 38 S/m, or 30 S/m - 36 S/m.

In a further aspect, the glass product may comprise a glass composition which contains alkali metal oxides in amounts of less than 20 % by weight, less than 15 % by weight, less than 12 % by weight, less than 10 % by weight or less than 5 % by weight. Optionally, the glass composition may be free of alkali metal oxides. In alternative embodiments, the amount of alkali metal oxides in the glass composition may be at least 1 % by weight or at least 2 % by weight. Optionally, the amount of alkali metal oxides in the glass composition may be ≥ 1 % by weight and < 20 % by weight or ≥ 2 % by weight < 10 % by weight.

The glass composition may be a borosilicate, alumino-borosilicate, or aluminosilicate glass.

In a further aspect, the glass composition may contain alkaline earth metal oxides in amounts of less than 20 % by weight, less than 15 % by weight, less than 12 % by weight, less than 10 % by weight, or less than 5 % by weight. Optionally, the glass composition may be free of alkaline earth metal oxides. In alternative embodiments, the amount of alkaline earth metal oxides in the glass composition may be at least 1 % by weight or at least 2 % by weight. Optionally, the amount of alkaline earth metal oxides in the glass composition may be ≥ 1 % by weight and < 20 % by weight or ≥ 2 % by weight < 10 % by weight.

Optional glass compositions include $Al_2O_3$ in an amount of at least 1.5 % by weight or at least 5.0 % by weight or even at least 10.0 % by weight. The amount of $Al_2O_3$ may be up to 23.0 % by weight, up to 20.0 % by weight or up to 18.0 % by weight. In certain embodiments, the amount of $Al_2O_3$ may range from 1.5 % to 23.0 % by weight, from 5.0 % to 20.0 % by weight or from 10.0 % to 18.0 % by weight.

Additionally or alternatively, the glass composition may include $B_2O_3$ in an amount of at least 0.0 % by weight or at least 8.0 % by weight or even at least 10.0 % by weight. The amount of $B_2O_3$ may be up to 20.0 % by weight, up to 16.0 % by weight or up to 14.0 % by weight. In certain embodiments, the amount of $B_2O_3$ may range from 0.0 % to 20.0 % by weight, from 8.0 % to 16.0 % by weight or from 10.0 % to 14.0 % by weight.

Many highly viscous glass compositions contain significant amounts of $SiO_2$, $Al_2O_3$ and $B_2O_3$. Optionally, the glass compositions used in this invention have a total content of $SiO_2$, $Al_2O_3$ and $B_2O_3$ of at least 75.0 % by weight, at least 78.0 % by weight or even at least 85.0 % by weight. The total amount of $SiO_2$, $Al_2O_3$ and $B_2O_3$ may be limited to not more than 97.0 % by weight, up to 93.5 % by weight or up to 90.0 % by weight. Optionally, the amount of $SiO_2$, $Al_2O_3$ and $B_2O_3$ may range from 75.0 % to 95.0 % by weight, from 78.0 % to 92.5 % by weight or from 85.0 % to 90.0 % by weight.

Optionally, glass compositions used in this invention may comprise (in % by weight, the composition summing up to 100 %):

| | |
|---|---|
| $SiO_2$ | 71 - 77 |
| $B_2O_3$ | 9 - 12 |
| $Al_2O_3$ | 5.5 - 8 |
| $Na_2O$ | 6 - 8 |
| $K_2O$ | 0.1 - 0.9 |
| $Li_2O$ | 0 - 0.3 |
| CaO | 0 - 1.5 |
| BaO | 0 - 1 |
| F | 0-0.3 |
| Cl- | 0 - 0,3 |
| MgO+CaO+BaO+SrO | 0 - 2 |

or

| | |
|---|---|
| $SiO_2$ | 71 - 77 |
| $B_2O_3$ | 9 - 12 |
| $Al_2O_3$ | 3.5 - 6 |
| $Na_2O$ | 5.5 - 8 |
| $K_2O$ | 0 - 0.5 |
| $Li_2O$ | 0 - 0.3 |
| CaO | 0 - 3 |
| BaO | 0 - 1.5 |
| F | 0-0.3 |
| Cl- | 0 - 0,3 |
| MgO+CaO+BaO+SrO | 0 - 2 |

or

| | |
|---|---|
| $SiO_2$ | 60 - 85 |
| $Al_2O_3$ | 0 - 10 |
| $B_2O_3$ | 5 - 20 |
| $Li_2O + Na_2O + K_2O$ | 2 - 16 |
| MgO+CaO+SrO+BaO+ZnO | 0 - 15 |

(continued)

| | |
|---|---|
| $TiO_2 + ZrO_2$ | 0 - 6 |
| $P_2O_5$ | 0 - 2 |

optionally further comprising

coloring oxides, such as $Nd_2O_3$, $Fe_2O_3$, CoO, NiO, $V_2O_5$, $MnO_2$, $TiO_2$, CuO, $CeO_2$, $Cr_2O_3$,
0 - 2 % by weight fining agents, such as $As_2O_3$, $Sb_2O_3$, $SnO_2$, $SO_3$, Cl, F and/or $CeO_2$, and
0 - 5 % by weight rare earth metal oxides

## Examples

### Dissolution of electrode material in a glass melt

A glass melt for a borosilicate glass for pharma packaging, comprising 74 - 77 % by weight $SiO_2$, 9 - 12 % by weight $B_2O_3$, 3.5 - 6 % by weight $Al_2O_3$, 5.5 - 8 % by weight $Na_2O$, 0 - 0.5 % by weight $K_2O$, 0 - 0.3 % by weight $Li_2O$, and 0 - 3 % by weight CaO, was heated to 1,620 °C using molybdenum electrodes immersed into the melt. Two electrodes were used. Different current frequencies were applied, namely 50 Hz, 1 kHz, and 10 kHz. Current density was 0.5 A/cm$^2$ for all experiments.

Electrode dissolution was the highest at 50 Hz. Dissolved electrode material, mainly in the form of $MoO_3$, gave the glass a green color. Dissolution of electrode material was far less at 10 kHz but still noticeable. The measured content of electrode material in the glass has been 45 ppm for the 50 Hz melt and 3 ppm for the 1 kHz and the 10 kHz melt.

## Claims

1. Method of making a glass product, comprising the steps

   - melting a batch of raw materials to form a glass melt in a melting tank,
   - heating the batch and/or the glass melt using two or more electrodes, the electrodes comprising an electrode material,
   - withdrawing the glass melt from the melting tank,
   - forming the glass melt into a glass product,

   wherein the electrode is operated at a current frequency of at least 1,000 Hz and at most 5,000 Hz.

2. Method according to claim 1, wherein the electrode is operated at a current frequency of less than 3,000 Hz.

**3.** Method according to claim 1 or 2, wherein

- the method is a continuous process or batch process; and/or
- additional heating is provided by a fuel burner or no fuel burner is used for additional heating; and/or
- the method is a continuous process having a throughput of at least 1 t/d·m² of melting tank cross-section.

**4.** Method according to at least one of the preceding claims, wherein a temperature of the glass melt, a withdrawal rate of glass melt from the melting tank, and an electrical operation frequency of the electrodes is such that the corrosion rate of the electrodes is less than 2.5 mm/a with a current density of 0.5 A/cm² and a glass melt temperature of 1,600 °C.

**5.** Method according to at least one of the preceding claims, wherein

- the electrode material is selected from Pt, Rh, Ir, Pd, alloys of these noble metals, Ta, Mo, $MoSi_2$, $MoZrO_2$, W, $SnO_2$, and combinations thereof; and/or
- the current density used at the electrodes is 0.2 A/cm² - 2.0 A/cm²; and/or
- a ratio of the current frequency to the electric conductivity of the melt at temperature T2 is 3 kHz·Ω·m to 140 kHz·Ω·m.

**6.** Method according to at least one of the preceding claims, wherein the electric conductivity of the melt at temperature T2 is at least 3 S/m.

**7.** Apparatus for glass melting comprising

- a melting tank having walls and a bottom, and optionally a cover, for holding a glass melt,
- a supporting structure for the walls and/or the bottom and/or the cover of the melting tank,
- two or more electrodes immersible into the glass melt,
- a transformer and a frequency changer,
- conductors connecting the transformer, frequency changer and electrodes, and
- optionally an outlet for the glass melt,

wherein

- the conductors connecting the electrodes with the frequency changer comprise coaxial shielding means; and/or
- the supporting structure comprises, preferably consists of, non-ferromagnetic materials, preferably a material having a relative permeability

$\mu_T$ of 1.0 to 80, in particular stainless steel.

**8.** Apparatus according to claim 7, wherein the supporting structure comprises bracings and/or guy-wires being arranged and/or constructed in a manner interrupting inductive loops.

**9.** Apparatus according to claim 7 or 8, wherein

- one or more electrodes are located partially or completely in or on a wall of the melting tank and/or in or on the bottom of the melting tank and/or constitute a wall section and/or a bottom section of the melting tank; and/or
- the electrode material is selected from Pt, Rh, Ir, Pd, alloys of these noble metals, Ta, Mo, $MoSi_2$, $MoZrO_2$, W, $SnO_2$, and combinations thereof.

**10.** Apparatus according to at least one of claims 7 to 9, wherein the frequency changer is set to provide a current frequency of at least 1,000 Hz and at most 5,000 Hz.

**11.** Apparatus according to at least one of claims 7 to 10, wherein the total power dissipation is less than 0.5 kWh/kg glass.

**12.** Apparatus according to at least one of claims 7 to 11, wherein the power dissipation determined between a frequency converter and the glass melt is less than 35 %.

**13.** Glass product, optionally obtainable according to the method of one of claims 1 to 6, comprising a glass composition having a fining agent and electrode material, wherein the fining agent is present in an amount of at least 300 ppm and the electrode material is present as an oxide in an amount of less than 5 ppm, the glass product comprising less than 2 bubbles per 10 g of glass, wherein optionally the glass composition has a total carbon content of less than 310 ppm, based on the weight of the carbon atoms with respect to the weight of the glass product.

**14.** Glass product according to claim 13, the glass composition

- having an amount of an electrode material in the form of an oxide of from 0.1 ppm to 5 ppm, wherein optionally the electrode material is selected from Pt, Rh, Ir, Pd, alloys of these noble metals, Ta, Mo, $MoSi_2$, $MoZrO_2$, W, $SnO_2$ and combinations thereof; and/or
- containing alkali metal oxides in amounts of less than 20 % by weight and/or alkaline earth metal oxides in amounts of less than 20 % by weight.

**15.** Glass product according to claim 13 or 14, the glass composition

    - having a conductivity for thermal radiation at 1,580 °C of at least 300 W/m·K; and/or
    - having an electric conductivity of at least 3 S/m in the molten state at temperature T2; and/or
    - having a T2 at 1,580 °C or higher, and/or a temperature T4 at 1,000 °C or higher, wherein T4 is the temperature where the glass has a viscosity of $10^4$ dPas and T2 is the temperature where the glass has a viscosity of $10^2$ dPas.

**16.** Glass product according to at least one of claims 13 to 15, wherein the fining agent is selected from the group consisting of $As_2O_3$, $Sb_2O_3$, $CeO_2$, $SnO_2$, $Fe_2O_3$, chloride, fluoride, sulfate, and combinations thereof.

Europäisches
Patentamt

European
Patent Office

Office européen
des brevets

# EUROPEAN SEARCH REPORT

Application Number

EP 22 19 6888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/085397 A1 (SCHOTT AG [DE]; CLAUSSEN OLAF [DE] ET AL.) 2 August 2007 (2007-08-02) * claims; figures 2-10 * | 1-16 | INV. C03B5/027 C03B5/167 C03B5/42 C03C3/091 |
| X | WO 2014/127108 A1 (CORNING INC [US]; BOOKBINDER ANDREA WEISS [US] ET AL.) 21 August 2014 (2014-08-21) * paragraphs [0056], [0094], [0097], [0103] * | 13-16 | |
| X | US 2006/144089 A1 (EICHHOLZ RAINER [DE] ET AL) 6 July 2006 (2006-07-06) * paragraphs [0035], [0134] - [0137], [0140]; claims; figures 1A-1C * | 1-16 | |
| X | US 2006/291528 A1 (KIEFER WERNER [DE] ET AL) 28 December 2006 (2006-12-28) * paragraphs [0101] - [0103]; figures 1A-1C * | 1-16 | |

TECHNICAL FIELDS
SEARCHED      (IPC)

C03B
C03C
H05B

The present search report has been drawn up for all claims

| Place of search | Date of completion of the search | Examiner |
|---|---|---|
| The Hague | 10 February 2023 | Creux, Sophie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 6888

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2023

| Patent document cited in search report | Publication date | Patent family member(s) | Publication date |
|---|---|---|---|
| WO 2007085397 A1 | 02-08-2007 | DE 102006003534 A1 | 02-08-2007 |
| | | EP 1991506 A1 | 19-11-2008 |
| | | JP 2009523697 A | 25-06-2009 |
| | | KR 20080096799 A | 03-11-2008 |
| | | WO 2007085397 A1 | 02-08-2007 |
| WO 2014127108 A1 | 21-08-2014 | CN 105377776 A | 02-03-2016 |
| | | EP 2956417 A1 | 23-12-2015 |
| | | JP 6128710 B2 | 17-05-2017 |
| | | JP 2016511739 A | 21-04-2016 |
| | | KR 20150119295 A | 23-10-2015 |
| | | TW 201434774 A | 16-09-2014 |
| | | US 2014230491 A1 | 21-08-2014 |
| | | WO 2014127108 A1 | 21-08-2014 |
| US 2006144089 A1 | 06-07-2006 | AU 2003288186 A1 | 23-06-2004 |
| | | AU 2003289901 A1 | 23-06-2004 |
| | | EP 1568253 A1 | 31-08-2005 |
| | | JP 2006509179 A | 16-03-2006 |
| | | JP 2006516046 A | 15-06-2006 |
| | | KR 20050089810 A | 08-09-2005 |
| | | KR 20050095825 A | 04-10-2005 |
| | | US 2006137402 A1 | 29-06-2006 |
| | | US 2006144089 A1 | 06-07-2006 |
| | | WO 2004052053 A1 | 17-06-2004 |
| | | WO 2004052054 A1 | 17-06-2004 |
| US 2006291528 A1 | 28-12-2006 | DE 10314955 A1 | 21-10-2004 |
| | | EP 1618074 A1 | 25-01-2006 |
| | | JP 4750017 B2 | 17-08-2011 |
| | | JP 2006521991 A | 28-09-2006 |
| | | TW 200508165 A | 01-03-2005 |
| | | US 2006291528 A1 | 28-12-2006 |
| | | WO 2004087587 A1 | 14-10-2004 |

EPO FORM P0459

For more details about this annex : see Official Journal of the European Patent Office, No. 12/82